Europäisches Patentamt

European Patent Office

Office européen des brevets

(11) Publication number: 0 388 066 A1

# EUROPEAN PATENT APPLICATION

(21) Application number: 90302403.2

(22) Date of filing: 07.03.90

(51) Int. Cl.5: **C02F 1/24, C02F 3/20, B01F 3/04, B03D 1/16**

(30) Priority: 13.03.89 US 322548

(43) Date of publication of application:
19.09.90 Bulletin 90/38

(84) Designated Contracting States:
AT BE CH DE DK ES FR GB GR IT LI LU NL SE

(71) Applicant: Aeration Industries Inc
4100 Peavey Road

Chaska Minnesota 55318(US)

(72) Inventor: Durda, Joseph A.
3135 N Shore Drive
Wayzata, MN 55391(US)

(74) Representative: Hepworth, John Malcolm et al
J.M. Hepworth & Co. 36 Regent Place
Rugby Warwickshire CV21 2PN(GB)

(54) Dispersed air flotation apparatus and method.

(57) An aeration apparatus is used for injecting fine air bubbles into a liquid undergoing treatment to remove material from the liquid by flotation with the bubbles. The apparatus includes a hollow impeller, a drive shaft connected to the impeller and a motor for rotating the drive shaft and impeller. The impeller has a plurality of openings in at least its upper major surface through which air exits from the hollow interior of the impeller. A shearing mechanism is located adjacent to, and downstream of, the openings, for reducing the size of the air bubbles exiting the openings. In one embodiment, a propeller is located adjacent to, and immediately above, the impeller, for producing a supplemental flow of liquid over the upper surface of the impeller.

FIG. 4.

EP 0 388 066 A1

## DISPERSED AIR FLOTATION APPARATUS AND METHOD

### TECHNICAL FIELD

The present invention is directed to an apparatus and method for removing materials, such as light suspended solids or dispersed oil, from liquids by flotation of the materials to the surface of the liquid. More particularly, the invention is directed to an apparatus and method which produces extremely fine bubbles for the flotation process in an energy efficient manner. The apparatus includes a hollow impeller with openings through which air bubbles exit and a shearing mechanism which reduces the size of the air bubbles exiting the openings.

### BACKGROUND OF THE INVENTION

Air flotation is an effective mechanism for removing light suspended solids or precipitated solids, emulsified substances, and dispersed oil from water. Particles, or very small oil droplets, which will not settle or float readily under quiescent conditions, can be flocculated or raised to the liquid surface by the lifting power of minute air bubbles which attach themselves to the suspended particles. The floating solids are then continuously removed from the liquid surface by a skimming mechanism. Flotation thickening is becoming a popular mechanism in the design of waste treatment plants to handle waste activated sludge. Flotation units have the advantage over gravity thickening tanks because they offer higher solids concentrations and lower initial costs for the equipment.

Several types of flotation mechanisms are currently in use. In one type of mechanism, air bubbles are supplied through a bubbler conduit located in a treatment tank. The air is supplied from a pressurized air tank to the conduit. In another type of mechanism, air is dissolved into the liquid being treated within a pressure or vacuum tank and thereafter released into a primary treatment tank, wherein the dissolved air is subsequently released. These types of flotation mechanisms release relatively large air bubbles, for example in the range of 1 to 5 mm, which are less efficient in carrying material to the liquid surface than finer air bubbles. These mechanisms also have a relatively high installation cost because of their complex air injection mechanisms, and also have high operating costs also attributable to the type of air injection mechanisms which are used.

Another type of flotation mechanism in the prior art uses a star-shaped, rotary driven propeller for injecting air into the liquid undergoing the treatment. Openings having a diameter greater than 2 mm are formed at the points of the star. While such a mechanism has a relatively lower installation cost than any of the above-described mechanisms, its operation is still relatively inefficient because it also produces air bubbles of a relatively large size, for example in the range of 2 to 2.5 mm.

Propeller type aerators such as disclosed in U.S. Patent No. 4,308,221 to Durda and U.S. Patent No. 4,774,031, to Schurz have been used in wastewater treatment, primarily for the purpose of efficiently transferring oxygen to the wastewater undergoing treatment, U.S. Patent No. 4,280,9101 discloses a method for treating a bounded body of water with a propeller type aerator wherein oxygen is injected into the body of water and an overall flow pattern of the water and air is induced by the rotating propellers. While this apparatus and method has proved to be efficient in the aeration of wastewater, the bubbles produced by the apparatus are generally too large to be efficiently used in a flotation process.

### SUMMARY OF THE INVENTION

The present invention is directed to an aeration apparatus for injecting fine air bubbles into a liquid undergoing treatment to remove material from the liquid by flotation with the bubbles. The apparatus includes a hollow impeller having a upper major surface and a lower major surface. A drive shaft is connected to the impeller and a motor is connected to the drive shaft for rotating the drive shaft and impeller in a predetermined direction. An air supply mechanism supplies air into the hollow interior of the impeller and the impeller has a plurality of openings in at least its upper major surface. A shearing mechanism is located adjacent to the openings on the downstream side in the rotational direction of the impeller. The shearing mechanism imparts a shearing force to the air bubbles exiting the openings in order to reduce the size of the exiting air bubbles.

In one preferred embodiment, the shearing mechanism includes depressions formed in the upper major surface of the impeller adjacent to the openings. The depressions begin immediately adjacent to downstream side of the openings and preferably have a parabolic shape with its length extending in the downstream direction from the opening. In another embodiment, the shearing mechanism formed as projections extending from the upper major surface of the impeller adjacent to the openings.

The openings and shearing mechanisms can also be located on the lower major surface of the hollow impeller. Also, if a higher volume of air bubbles is required, a propeller can be disposed immediately above and adjacent the impeller. The propeller is rotated by the drive shaft and increases the flow of the treatment liquid over the outer surface of the hollow impeller, thereby inducing a higher flow of air bubbles through the openings.

The hollow impeller can take on a generally disc-shaped configuration with a circular circumference and upper and lower facing concave surfaces. Alternatively, the upper surface of the impeller can take on a bell-shape.

The present invention is also directed to a method of removing material from a liquid by flotation of the material with air bubbles. The method includes the steps of inserting a hollow impeller having an air supply to its interior into the liquid being treating; rotating the impeller in the liquid to produce a reduced pressure along the surface of the impeller to thereby induce a flow of air bubbles through openings in the hollow impeller; reducing the size of the air bubbles exiting the openings in the hollow propeller by passing the air bubbles exiting the openings through a localized shear zone adjacent to, and downstream of, the openings: and floating material to the surface of the liquid with reduced size air bubbles. In this method, the air bubbles preferably exit the openings with a diameter substantially in the range from 2 to 5 mm and have their diameters reduced to substantially in the range of 0.50 to 0.90 mm by passing through the shear zone. Where a higher volume of air bubbles is required, a supplemental flow of liquid can be created over the upper surface of the impeller by rotating a propeller above, and adjacent to, the impeller.

The method and apparatus of the present invention exhibits significant advantages over prior art flotation of mechanisms. First of all the initial capital cost of a propeller type aerator of a present invention is significantly lower than the initial cost of a pressurized air bubbling system or a dissolved air system which require a complex system of conduits, as well as pressurization or vacuum holding tanks. The present invention also exhibits higher operating efficiencies since the motors used to drive the apparatus are generally low powered motors in the range of seven and a half to twenty horsepower. Higher operating efficiencies also occur because the combined impeller and shearing mechanism produce extremely fine air bubbles which have proven to more effectively float material to the liquid surface than the larger air bubbles produced by the apparatus of the prior art. Also, where a larger treatment volume or area is undergoing treatment, the use of the propeller and combination with the impeller mixes the fine air bubbles over a larger volume.

Various advantages and features of novelty which characterize the invention are pointed with particularity in the claims annexed hereto and forming a part hereof. However, for a better understanding of the invention, its advantages, and objects obtained by its use, reference should be made the drawings which form a further hereof, and to the accompanying descriptive matter, in which there is illustrated and described preferred embodiments of the invention.

## BRIEF DESCRIPTION OF THE DRAWINGS

Figure 1 is a diagrammatic side view of the apparatus in accordance with the present invention incorporated into a first type of separation tank; Figure 2 is a diagrammatic side view of the apparatus in accordance with the present invention incorporated into a second type of separation tank; Figure is a diagrammatic side view illustrating a pair of apparatus in accordance with the present invention incorporated into a third type of separation tank;

Figure 4 is a perspective view illustrating the apparatus in accordance with the present invention;

Figure 5 is a perspective view of a portion of another embodiment of apparatus in accordance with the present invention illustrating a vortex prevention shield disposed above a hollow impeller and a propeller;

Figure 6 is a top plan view of a hollow impeller in accordance with the present invention;

Figure 7 is a bottom plan view of the impeller;

Figure 8 is a sectional view taken general along line 8-8 of Figure 6;

Figure 9 is an enlarged plan view of an opening and depression in the surface of the impeller;

Figure 10 is a sectional view taken along line 10-10 of Figure 7;

Figure 11 is a sectional view taken along line 11-11 of Figure 7;

Figure 12 is a bottom plan view of another embodiment of impeller in accordance with the present invention;

Figure 13 is a sectional view through a further embodiment of a hollow impeller in accordance with present invention; and

Figure 14 is a sectional view through a further embodiment of the present invention illustrating the shearing mechanism as a projection.

## DETAILED DESCRIPTION OF THE INVENTION

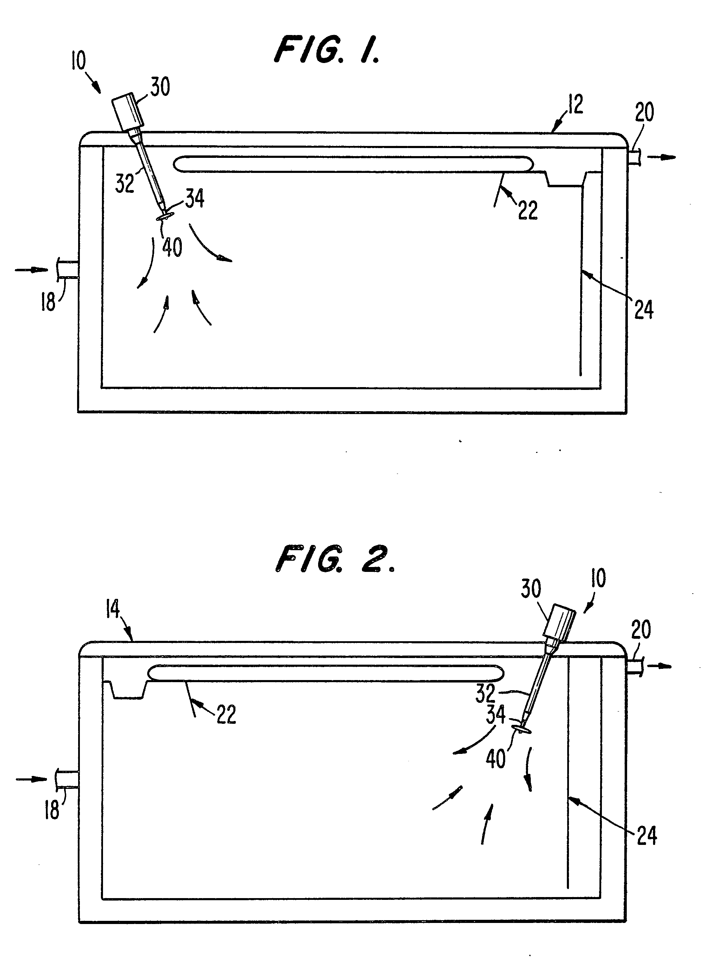

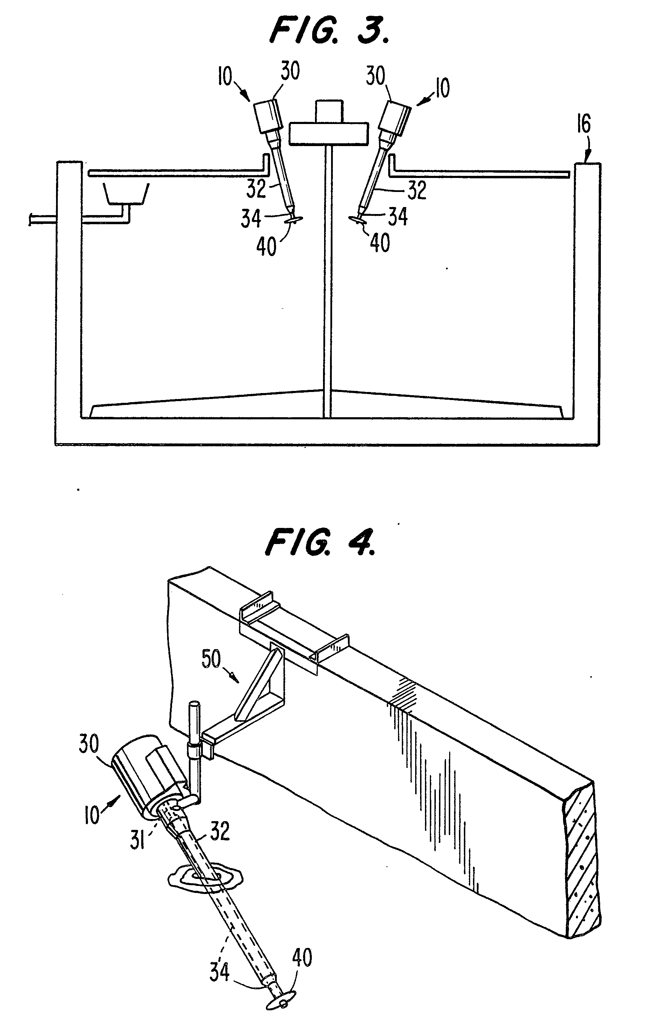

Referring to the drawings in detailed, wherein like numerals indicate like elements they are shown in Figures 1, 2 and 3 an aeration apparatus designated generally as 10. Figure 1 illustrates apparatus 10 used in a concurrent separating tank 12; Figure 2 illustrates apparatus 10 used in a countercurrent separation tank 14; and Figure 3 illustrates apparatus 10 used in a circular-type separation tank 16.

In concurrent separation tank 12, the liquid to be treated enters tank 12 through an influent port 18, undergoes treatment in tank 12, and exits effluent port 20. Apparatus 10 in a manner to be discussed in greater detail hereinafter, provides a source of fine air bubbles to the liquid undergoing treatment for the purpose of floating material, such as suspended or precipitated solids, emulsified substances, and dispersed oil to the surface of the liquid. The bubbles attach themselves to the material and move in an upward direction. This is due to the fact that the materials now have a specific gravity lower than water when the bubble is attached. Apparatus 10 injects the air bubbles in the downward direction, angled slightly in the direction of the flowing liquid current from influent port 18 toward effluent port 20. A scum beach or baffle 22 directs the floating material upward and away from effluent port 20. A baffle 24 can be located adjacent effluent port 20.

Countercurrent separation tank 14 utilizes similar components as concurrent separation tank 12 except that aerator 10 is disposed adjacent effluent port 20 and is angled against the flow of the liquid from influent port 18 to effluent port 20, and scum beach or baffle 22 is located adjacent to the opposite side of tank 14. Similarly, in the circular-type separation tank 16, scum beach 22 is replaced with scum trough 26 and flights 28, while the liquid to undergo treatment enters an influent area adjacent the center of tank 16 and exits through an effluent area adjacent the periphery of tank 16. Aside from the use of aeration apparatus 10, separation tanks 12, 14 and 16 operate in a conventional manner.

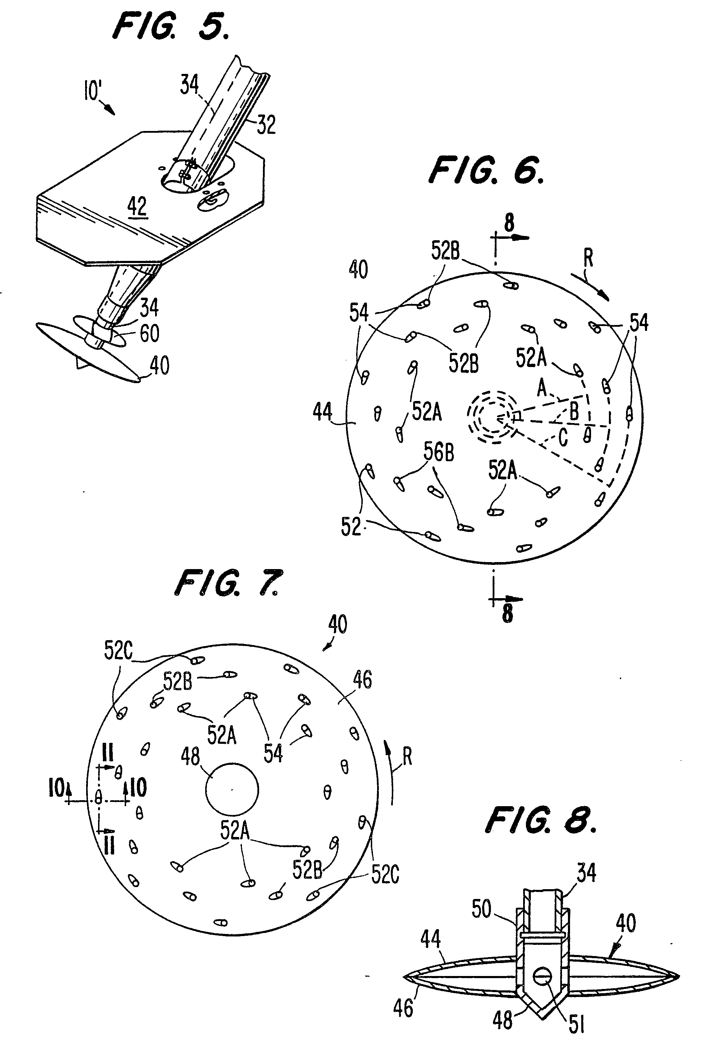

Aeration apparatus 10 is a modification of the propeller-type aerator such as disclosed in U.S. Patent 4,308,221 issued to Durda on December 29, 1981, and 4,774,031 issued to Schurz on September 27, 1988, the disclosures of which are hereby incorporated by reference. Rather than using a propeller of the type disclosed in the patents, apparatus 10 utilizes a hollow impeller of the type shown in greater detail in Figures 5 through 14 inclusive. Apparatus 10 thus includes a motor 30 connected to the top of an outer housing 32, and a rotary driven inner shaft 34 journaled within housing 32 and coupled to the output drive shaft 31 of motor 30. A hollow impeller 40 is connected to and driven by inner shaft 34. As seen in Figure 5, inner shaft 34 is preferably a hollow tube which is connected to impeller 40 and whose hollow interior communicates with the hollow interior of impeller 40.

In certain applications. the flow of the liquid caused by rotating impeller 40 causes the formation of vortexes in the liquid. In such cases, a vortex prevention shield in the form of a plate 42, as seen in Figure 5, is attached to outer housing 32. While shaft 34 is illustrated as a hollow tube, shaft 34 alternatively could be solid, as long as a conduit is provided for directing air into the hollow interior of impeller 40.

A first embodiment of impeller 40 is illustrated in detail in Figures 6 through 11. As seen therein impeller 40 is generally disc-shaped with a circular circumference, and is formed of an upper curved plate 44 and a lower curved plate 46. Plates 44 and 46 each have inner major concave surfaces and outer major convex surfaces. Plates 44 and 46 are joined to one another along their perimeters in a conventional manner, for example, by welding if the plates are made of metal. A coupling tube 50 extends from a hole in the center of upper plate 44, through the hollow interior of impeller 40, and through a hole in lower plate 46. Tube 50 is attached to plates 44 and 46, and has a closed, tapered projection 48 at its lower end. Tube 50 is secured to and communicates with the hollow interior of shaft 34 and the hollow interior of impeller 40 through apertures 51.

A plurality of holes 52 are formed through both upper plate 44 and lower plate 46. Holes 52 are arranged in a similar manner in both plates 44 and 46. As seen in Figures 6 and 7, holes 52 are arranged in three circularly arranged sets 52A. 52B and 52C. Holes 52A are arranged about a common radial distance A from the center of the impeller, while holes 52B are arranged about a common radial distance B, slightly larger than radial distance A, and holes 52C are arranged about a common radial distance C greater than radial distances A and B. Each set of holes of 52A, 52B and 52C are offset or staggered from one another in the rotational direction so that no opening of one set is located along a common radial line with an opening from either of the other sets. It is been found that this particular arrangement of openings results in a particularly efficient exiting and flow of bubbles from the hollow interior of impeller 40 and along the upper and lower surfaces of 44 and 46. That is, this staggering of openings allows bubble formation at a given hole 52 without interference from another bubble forming at another hole 52.

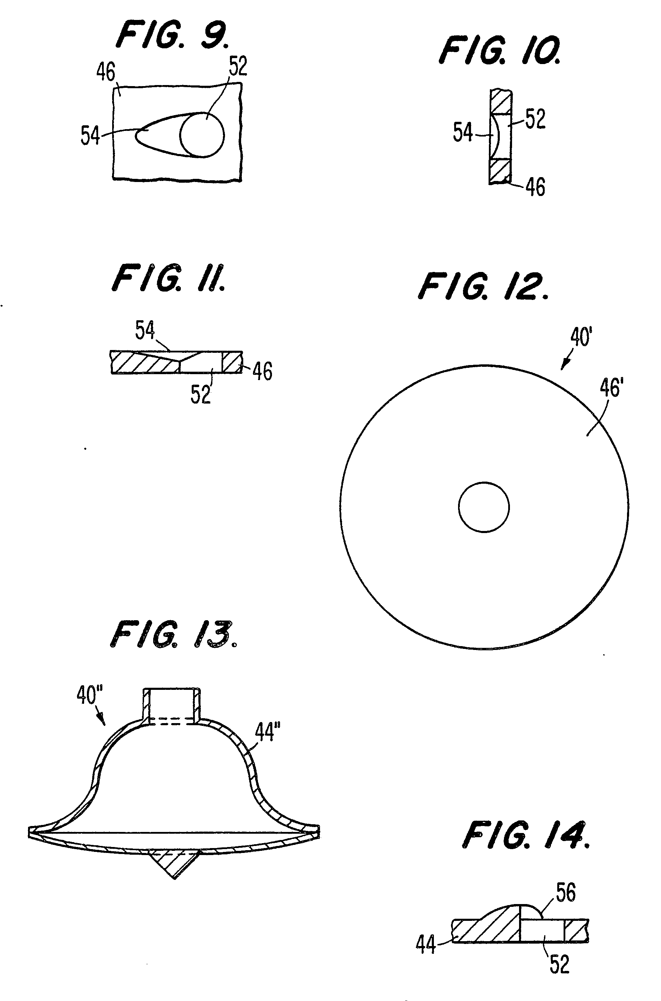

A depression 54 is formed immediately adjacent to each opening 52. Depressions 54 are formed at the trailing or downstream end of each opening 52 relative to the rotational direction R of impeller 40 as seen in Figures 6 and 7. Depressions 54 have a generally parabolic configuration with the deepest portion of the depression being located immediately adjacent to the downstream most portion of opening 52, as seen in the Figure 11. The depth of depressions 54 gradually decreases from that point in both the downstream direction and from the radial side-to-side direction as seen in Figures 10 (radial direction) and 11 (downstream direction). The maximum depth is approximately one-third to one-half of the thickness of the plate in which the depressions and openings are formed.

Depressions 54 function as shearing mechanisms in the following manner. As an air bubble exits an opening 52 and begins to proceed in the downstream direction, it is acted upon by the depression 54 which places a shearing force on the air bubble and reduces the diameter of the air bubble from its exiting diameter to a smaller diameter by breaking the bubbles into a plurality of smaller bubbles (please confirm this). The exiting diameter of the air bubble is determined by the diameter of opening 52. However, there is practical limit to the smallest size openings 52 can be made, since the smaller the openings are made, the higher the back pressure and the more difficult it becomes to induce air flow through the openings. Thus, in order to provide extremely fine air bubbles for dispersed air flotation, the combination of relatively small size openings 52 and a shearing mechanism such as depressions 54 is utilized in the present invention. It has been found that an efficient size for openings 52 is in the range 2 to 5 mm, wherein exiting air bubbles have a diameter of 2 to 5 mm, and depressions 54 reduce the diameter of the air bubbles to the range of approximately 0.50 to 0.90 mm.

Figure 14 illustrates another embodiment of a shearing mechanism adjacent an opening 52. In this embodiment, the shearing mechanism is a projection located at immediately adjacent to the downstream of opening 52. Projection 56 likewise provides a shearing force on an air bubble exiting opening 52 to reduce its size.

Figures 12 and 13 illustrate alternate embodiments of an impeller. In Figure 12, impeller 40′ has a lower plate 46′ which is solid; i.e.. no openings are formed through lower plate 46′. It has been found in many instances that a sufficient volume of air bubbles can be provided when openings 52 are formed only in top plate 44. Figure 13 illustrates an embodiment of impeller 40″ wherein upper plate 44″ has a bell-shaped configuration. This embodiment of impeller has been found particularly useful where a more axial flow of the air bubbles is desired rather than the more radial flow provided by disc-shaped impellers 40 or 40′.

Figure 5 illustrates another embodiment of apparatus 10′ wherein a propeller 60 is attached to and rotated with shaft 34 at a location immediately above and adjacent impeller 40. This embodiment is useful in environment where a particularly high concentration of air bubbles is required. In this embodiment, propeller 60 causes an increased liquid flow over the top surface of upper plate 44 thereby increasing the pressure differential across openings 52 and increasing induced air flow through the openings. This embodiment is also useful where the bubbles must be forced further in the treatment vessel, since propeller 60 provides an axial flow of the liquid along the rotation axis of the apparatus. As a comparison. when the impeller 40 is used by itself an air flow of between one and two cubic feet per minute, which is sufficient to supply 100 to 200 pounds of air per day, is supplied. However, with use of propeller 60, the flow rate of the air can be increased to approximately five cubic feet per minute, which can supply up to 540 pounds of air per day.

Numerous characteristics and advantages of the invention have been set forth in the foregoing description, together with details of the structure and function of the invention, and the novel features thereof are pointed out in the appended claims. The disclosure, however, is illustrative only in and changes may be made in detail, especially in matters of shape, size and the arrangement of parts, within the principle of the invention to the full extent intended by the broad general meaning of the terms in which the appended claims are expressed.

## Claims

1. An aeration apparatus for injecting fine air bubbles into a liquid undergoing treatment to remove material from the liquid by flotation with the bubbles comprising a hollow impeller having an upper major surface and a lower major surface, a drive shaft connected to said impeller, motor means connected to said drive shaft for rotating said drive shaft and impeller in a predetermined direction, air supply means for supplying air into the hollow interior of said impeller, said impeller having a plurality of openings in at least said upper major surface, and shearing means adjacent said openings and downstream of the rotational direction of said impeller for imparting a shearing force to the air bubbles exiting said openings to reduce the size of the exiting air bubbles.

2. An aeration apparatus for injecting fine air bubbles into a liquid undergoing treatment to remove material from the liquid by flotation with the bubbles comprising a hollow impeller having an upper major surface and a lower major surface a drive shaft connected to said impeller a propellor connected to said drive shaft above and adjacent to said impeller, motor means connected to said drive shaft for rotating said drive shaft, impeller and propeller in a predetermined direction and air supply means for supplying air into the hollow interior of said impeller, said impeller having a plurality of openings in at least said upper major surface.

3. An aeration apparatus in accordance with claim 2 including shearing means adjacent said openings and downstream of the rotational direction of said impeller for imparting a shearing force to the air bubbles exiting said openings to reduce the size of the exiting air bubbles.

4. An aeration apparatus in accordance with any of the preceding claims wherein said shearing means includes depressions formed in the upper major surface adjacent said openings.

5. An aeration apparatus in accordance with any of claims 1 to 3 wherein each of said depressions begins immediately adjacent a downstream side of an adjacent one of said openings.

6. An aeration apparatus in accordance with any of the preceding claims wherein each of said depressions has a parabolic shape with its length extending in the downstream direction from said opening.

7. An aeration apparatus in accordance with any of the preceding claims wherein said shearing means includes projections extending from the upper major surface adjacent said openings.

8. Aeration apparatus in accordance with any of the preceding claims, a first set of said openings is located on said upper surface at a first radius from the axis of said drive shaft and at least one additional set of said openings is located on said upper surface at a second radius different from said first radius.

9. An aeration apparatus in accordance with claim 8 wherein the openings of said first set are staggered in the rotational direction with respect to the openings of said second set.

10. An aeration apparatus in accordance with any of the preceding claims wherein said openings and shearing means are located on both said upper and lower major surfaces.

11. An aeration apparatus in accordance with any of the preceding claims wherein said hollow impeller is generally disc shaped with a circular circumference and facing inner concave surfaces.

12. An aeration apparatus in accordance with any of the preceding claims wherein the upper major surface of said hollow impeller is generally bell shaped.

13. An aeration apparatus in accordance with claim 1 wherein a propeller is attached to said drive shaft adjacent to and above the upper major surface of said hollow impeller.

14. An aeration apparatus in accordance with claims 2 to 5 wherein said openings have a diameter between approximately 2 and 5 mm.

15. An aeration apparatus in accordance with claim 1 wherein said openings have a diameter between approximately one-eighth and one-quarter of an inch.

16. An aeration apparatus in accordance with claims 4 or 5 wherein said openings leave a diameter between approximately one-eighth and one-quarter of an inch.

17. An aeration apparatus in accordance with claim 16 wherein said depressions extend downstream from said openings for a distance of at least approximately the diameter of the openings.

18. An aeration apparatus in accordance with claim 5 wherein said depressions extend downstream from said openings for a distance of at least approximately the diameter of the openings.

19. A method for removing material from a liquid by flotation of the material with air bubbles comprising the steps of:
inserting a hollow impeller having an air supply to its interior into the liquid being treated;
rotating the impeller in the liquid to produce a reduced pressure along the surface of the impeller and thereby induce a flow of air bubbles through openings in the hollow impeller;
reducing the size of the air bubbles exiting the openings in the hollow impeller by passing the air bubbles exiting the openings through a localised shear zone immediately adjacent to, and downstream of the openings; and
floating material to the surface of the liquid with the reduced size air bubbles.

20. A method in accordance with claim 19, wherein the air bubbles exiting the openings have a diameter substantially in the range of 2 to 5 mm and have their diameters reduced to substantially in the range of 0.50 to 0.90 mm by passing through the shear zone.

21. A method in accordance with claim 19 or claim 20 wherein a supplemental flow of the liquid is created over an upper surface of the impeller by rotating a propeller above and adjacent to the impeller.

22. A method in accordance with claim 19 or claim 20 wherein the air bubbles exit through openings in at least an upper major surface of the impeller.

23. A method in accordance with claim 21 wherein the air bubbles exit through openings in at least an upper major surface of the impeller.

## FIG. 1.

## FIG. 2.

# FIG. 3.

# FIG. 4.

# FIG. 5.

*10'*

34
32
42
34
60
40

# FIG. 6.

8

40
52B
54
R
52B
54
52A
A
B
52A
C
44
56B
52A
52

8

# FIG. 7.

40
52C
52B
46
52A
54
II
48
10
10
II
52A
R
52A
52B
52C

# FIG. 8.

34
50
40
44
46
46
48
51

FIG. 9.

FIG. 10.

FIG. II.

FIG. 12.

FIG. 13.

FIG. 14.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ENGINEERING, vol. 81, no. 6, 18th March 1974, page 60; "Rotary sparger features porous-metal impeller" | 1,2,3, 19,22, 23 | C 02 F 1/24 <br> C 02 F 3/20 <br> B 01 F 3/04 <br> B 03 D 1/16 |
| A | LU-A- 81 786 (NOORDVOS SCHROEVEN) <br> * Page 10, lines 1-4 * | 1,2,19 | |
| A | DE-A-3 610 744 (AWATECH) <br> * Column 3, lines 37-47 * | 1,2,19 | |

TECHNICAL FIELDS SEARCHED (Int. Cl.5)

C 02 F

The present search report has been drawn up for all claims

| Place of search | Date of completion of the search | Examiner |
|---|---|---|
| THE HAGUE | 19-06-1990 | KASPERS H.M.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)